# EUROPÄISCHE PATENTSCHRIFT

(11) **EP 2 751 400 B1**
(45) Veröffentlichungstag und Bekanntmachung des Hinweises auf die Patenterteilung: **09.09.2015**
(21) Anmeldenummer: 12737240.7
(22) Anmeldetag: 04.07.2012
(51) Int. Cl.: F01N 3/20

(54) **VORRICHTUNG ZUR ABGASNACHBEHANDLUNG VON BRENNKRAFTMASCHINEN, VERFAHREN ZUR HERSTELLUNG**
DEVICE FOR THE EXHAUST GAS AFTER-TREATMENT OF EXTERNAL COMBUSTION ENGINES, AND METHOD FOR PRODUCING SAME
DISPOSITIF POUR LE POST-TRAITEMENT DES GAZ D'ÉCHAPPEMENT DE MOTEURS À COMBUSTION INTERNE ET SON PROCÉDÉ DE FABRICATION

(30) Priorität: 29.08.2011 DE 102011081694
(43) Veröffentlichungstag der Anmeldung: 09.07.2014
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2012/062964
(87) Internationale Veröffentlichungsnummer: WO 2013/029839

(56) Entgegenhaltungen:
- EP-A1- 0 816 151
- DE-A1-102006 046 901
- DE-A1-102007 059 826
- DE-A1-102009 029 304
- DE-A1-102009 029 666

## Beschreibung

Die Erfindung betrifft eine Vorrichtung zum Bereitstellen einer Flüssigkeit, insbesondere eines Abgasnachbehandlungsmittels für ein Kraftfahrzeug, mit einem Tank zur Aufnahme des Abgasnachbehandlungsmittels und mit einer Flüssigkeitsentnahmeeinrichtung, die ein Fördermodul und eine in dem Tank anordenbare Heizeinrichtung aufweist, wobei die Heizeinrichtung einen durch eine Tanköffnung in den Tank einbringbaren Heiztopf sowie einen zumindest die Tanköffnung verschließenden Deckel aufweist, und wobei mindestens eine Einrichtung zum Befestigen des Deckels an dem Tank vorgesehen ist.

Weiterhin betrifft die Erfindung ein Verfahren zur Herstellung einer Vorrichtung wie sie oben beschrieben wurde.

### Stand der Technik

Vorrichtungen sowie Verfahren der eingangs genannten Art sind aus dem Stand der Technik bekannt. Bei Kraftfahrzeugen mit Brennkraftmaschinen muss aufgrund der in den nächsten Jahren anstehenden Abgasgesetzgebungen insbesondere der Schadstoff NOx reduziert werden. Eine bekannte Methode, die dabei zur Anwendung kommt, ist das SCR (Selective Catalytic Reduction = Selektive katalytische Reduktion)-Verfahren, bei dem NOx unter Zuhilfenahme eines flüssigen Abgasnachbehandlungsmittels zu N₂ und H₂O reduziert werden. Das Abgasnachbehandlungsmittel wird in einem Tank im Kraftfahrzeug mitgeführt und mittels einer Fördereinrichtung zu einem Dosiermodul gefördert, welches eine gewünschte Menge des Abgasnachbehandlungsmittels dem Abgas der Brennkraftmaschine stromaufwärts eines SCR-Katalysators beimischt. Damit das Abgasnachbehandlungsmittel auch bei Temperaturen unterhalb des Gefrierpunktes zur Verfügung steht, ist es bekannt, der das Fördermodul aufweisenden Flüssigkeitsentnahmeeinrichtung eine Heizeinrichtung hinzuzufügen, die gefrorenes Abgasnachbehandlungsmittel bei Bedarf auftaut beziehungsweise verflüssigt. Häufig umfasst die Heizeinrichtung, wie beispielsweise in der Offenlegungsschrift DE 10 2006 046 901 A1 offenbart, einen Heiztopf, dem insbesondere ein oder mehrere Heizelemente der Heizeinrichtung zugeordnet sind. Das sich in dem Topf befindliche Abgasnachbehandlungsmittel kann dadurch besonders effizient aufgeheizt beziehungsweise aufgetaut werden, sodass in kurzer Zeit flüssiges Abgasnachbehandlungsmittel zur Verfügung gestellt werden kann. Üblicherweise führt von der Fördereinrichtung eine Sauglanze oder Saugschlauch in oder durch den Heiztopf, um das flüssige beziehungsweise aufgetaute Abgasnachbehandlungsmittel zu entnehmen.

Zur Befestigung der Flüssigkeitsentnahmeeinrichtung an dem Tank wird üblicherweise, wie in der genannten Offenlegungsschrift gezeigt, eine Überwurfmutter verwendet, die auf einem Außengewinde eines Tankstutzens aufschraubbar ist. Diese hat jedoch den Nachteil, dass, wenn das Fördermodul einen entsprechend großen Umfang aufweist, stets der Heiztopf und gegebenenfalls ein Deckel zuerst an dem Tank mittels der Überwurfmutter montiert werden müssen, bevor die Fördereinrichtung montierbar ist.

Die DE 10 2009 029 666 beschreibt eine Einbaueinheit für einen Vorratstank, welche eine Manschette und ein Topfteil umfasst.

### Offenbarung der Erfindung

Die erfindungsgemäße Vorrichtung zeichnet sich durch die Merkmale des Anspruchs 1 aus und hat gegenüber den bekannten Vorrichtungen den Vorteil, dass kein fest vorgegebener Montage- und Logistikablauf befolgt werden muss, stattdessen ist es nunmehr möglich, die Komponenten der Vorrichtung, insbesondere den Heiztopf, einen Deckel und die Fördereinrichtung - unabhängig von ihrem Umfang -, vorzumontieren und anschließend an dem Tank zu befestigen. Hierzu sieht die erfindungsgemäße Vorrichtung vor, dass die Einrichtung zum Befestigen der Flüssigkeitsentnahmeeinrichtung an dem Tank wenigstens ein zumindest radial verformbares Spannelement aufweist, das zur Befestigung dieser an dem Tank derart radial verformt ist, dass es zumindest einen Bereich der Flüssigkeitsentnahmeeinrichtung und einen Radialvorsprung des Tanks axial umgreift. Die Flüssigkeitsentnahmeeinrichtung, insbesondere ein Gehäuseteil dieser, wird also mittels eines radial verformbaren Spannelements an dem Tank gehalten, wobei radial im Sinne der Erfindung stets in Bezug auf die Mittelachse der Tanköffnung zu verstehen ist. Der Tank weist hierzu einen Radialvorsprung auf, der von dem Spannelement axial umgriffen beziehungsweise hintergriffen wird, sodass das Spannelement bereichsweise eine axiale Stirnfläche des Radialvorsprungs bedeckt beziehungsweise auf dieser aufliegt. Gleichzeitig liegt das Spannelement auf einer Schulter oder Stirnfläche der Flüssigkeitsentnahmeeinrichtung, insbesondere an einer Stirnfläche oder Schulter eines dem Heiztopf zugeordneten Deckels der Flüssigkeitsentnahmeeinrichtung, auf, die auf der dem Radialvorsprung abgewandten Seite liegt, sodass das Spannelement die Flüssigkeitsentnahmeeinrichtung beziehungsweise den Deckel und den Tank axial umgreift. Der Heiztopf ist bevorzugt mit einem Deckel versehen, der zumindest den Heiztopf verschließt, damit kein aufgetautes Abgasnachbehandlungsmittel aus dem Heiztopf herausschwappt und außerhalb des Heiztopfes wieder gefriert, wodurch es daran gehindert werden würde, wieder in den Heiztopf zurück zu gelangen und der Flüssigkeitsentnahmeeinrichtung zur Entnahme zur Verfügung zu stehen. Zweckmäßigerweise weist der Heiztopf entsprechende Öffnungen auf, die das Eindringen von Abgasnachbehandlungsmittel beispielsweise durch den Boden des Heiztopfes oder durch seine Mantelwand beziehungsweise Seitenwand erlaubt. Deckel und Radialvorsprung sind somit zumindest formschlüssig von dem Spannelement aneinander gehalten. Dadurch, dass das Spannelement radial verformbar ist, lässt es sich auch dann montieren, wenn die Fördereinrichtung einen größeren Durchmesser als die Tanköffnung aufweist. Voraussetzung ist hierfür lediglich, dass das Spannelement in der maximal verformten beziehungsweise geöffneten Stellung (also ohne dass es dabei beschädigt wird) einen größeren Durchmesser als die Fördereinrichtung aufweist oder radial derart weit öffenbar ist, dass es seitlich, also radial auf den Deckel beziehungsweise die Flüssigkeitsentnahmeeinrichtung aufschiebbar ist. Insbesondere durch Verringern des Durchmessers des Spannelements gelangt das Spannelement in die den Deckel und den Radialvorsprung des Tanks axial umgreifende Stellung.

Vorzugsweise weist das Spannelement ein elastisch und/oder plastisch verformbares Ringsegmentelement auf. Hierdurch lässt sich das verformbare Spannelement auf einfache Art und Weise an dem Deckel und dem Radialvorsprung montieren. Das Ringsegmentelement erstreckt sich vorzugsweise über mehr als 180°, sodass es Deckel und Radialvorsprung in Umfangsrichtung sicher umgreift.

Gemäß einer vorteilhaften Weiterbildung der Erfindung ist vorgesehen, dass das Spannelement wenigstens eine Spannvorrichtung, insbesondere einen umlegbaren Spannbügel und/oder eine Spannverschraubung, zur radialen Verformung des Spannelements aufweist. Zweckmäßigerweise überbrückt die Spannvorrichtung die Öffnung des nicht geschlossenen Spannelements in Umfangsrichtung, sodass durch Betätigen der Spannvorrichtung die freien Enden des Spannelements aufeinander zu bewegt und dadurch der Innendurchmesser des Spannelements verringert wird, wodurch sich dieses seitlich an Deckel und Radialvorsprung anlegt.

Gemäß einer alternativen Ausführungsform ist vorgesehen, dass das Spannelement wenigstens zwei gelenkig miteinander verbundene Ringsegmentelemente aufweist. Die Ringsegmentelemente können dabei ebenfalls verformbar und/oder auch im Wesentlichen steif ausgebildet sein, um die gewünschte Funktion zu erfüllen. Die oben beschriebene Spannvorrichtung ist dann zweckmäßigerweise den freien Enden unterschiedlicher beziehungsweise gegenüberliegender Ringsegmentelemente zugeordnet, insbesondere auf der einem die Ringsegmentelemente verbindenden Gelenk gegenüberliegenden Seite des Spannelements.

Besonders bevorzugt weist das jeweilige Ringelement einen V- oder U-förmigen Querschnitt auf. Verlaufen die gegenüberliegenden Flanken des Ringsegmentelements dabei schräg zueinander, insbesondere V-förmig, so wirken sie für das Ringsegmentelement selbstzentrierend in Bezug auf dessen axiale Ausrichtung und führen darüber hinaus dazu, dass der Deckel mit dem Radialvorsprung verspannt wird. Das jeweilige Ringsegmentelement ist dazu bevorzugt in seiner Axialerstreckung zumindest im Wesentlichen steif ausgebildet, sodass entsprechende Anpresskräfte erzeugt werden, wenn es radial in Richtung des Deckels beziehungsweise des Radialvorsprungs verformt wird.

Gemäß einer vorteilhaften Weiterbildung der Erfindung ist vorgesehen, dass das Spannelement als Spannschelle, insbesondere als V- oder U-Schelle ausgebildet ist. Zur Befestigung des Deckels und damit der Flüssigkeitsentnahmeeinrichtung kann somit eine handelsübliche Spannschelle mit V- oder U-förmigem Querschnitt verwendet werden, wodurch die Herstellungskosten gering gehalten werden. Darüber hinaus gestaltet sich die Montage einfach, wodurch Montagezeit verkürzt und der Aufbau vereinfacht wird.

Um zu verhindern, dass bei gefrierendem Abgasnachbehandlungsmittel der Druck in dem Heiztopf derart groß wird, dass der Deckel von dem Heiztopf gelöst oder beschädigt werden könnte, ist bevorzugt vorgesehen, dass zwischen dem Deckel und dem Heiztopf wenigstens ein Zugfederelement, insbesondere ein elastisch verformbares Wellrohr angeordnet ist, das Deckel und Heiztopf zusammenhält. Vorzugsweise sind Deckel und Heiztopf axial aneinander geführt, wozu beispielsweise der Deckel mit einem zylinderförmigen Vorsprung in den Heiztopf eingreift, wobei Außendurchmesser des zylinderförmigen Vorsprungs und Innendurchmesser des Heiztopfes in diesem Bereich zumindest annähernd gleich sind. Gefriert das Fluid und vergrößert sich dadurch dessen Volumen, so erlaubt das Zugfederelement, dass der Deckel relativ zu dem Heiztopf axial verschoben wird. Taut das Abgasnachbehandlungsmittel wieder auf, zieht das Zugfederelement Deckel und Heiztopf wieder in ihre Ausgangsstellung zurück. Vorzugsweise ist das Wellrohr derart an dem Deckel und dem Heiztopf angeordnet beziehungsweise befestigt, dass es gleichzeitig eine Dichtung zwischen dem Heiztopf und dem Deckel bildet, wodurch ein Herausschwappen des flüssigen Nachbehandlungsmittels verhindert wird.

Vorzugsweise ist der Heiztopf an den Deckel mittels einer Rastverbindung gehalten, die entgegen der Federkraft des Zugfederelements lösbar ist. Dies hilft insbesondere bei der Vormontage, sodass sich der Heiztopf nicht von dem Deckel löst und somit eine vollständig vormontierte Flüssigkeitsentnahmeeinrichtung darstellbar ist. Ist die Flüssigkeitsentnahmevorrichtung an dem Tank mittels des vorteilhaften Spannelements befestigt, und gefriert beispielsweise das Abgasnachbehandlungsmittel, so erlaubt die lösbare Rastverbindung, dass Deckel und Topf sich weiter voneinander entfernen. Zweckmäßigerweise ist der Heiztopf in dem Tank derart gelagert, dass er axial verschiebbar ist. Zum Lösen der Rastverbindung kann diese beispielsweise zumindest bereichsweise elastisch verformbar ausgebildet sein, sodass bei Überschreiten einer Grenzkraft die Rastverbindung gelöst wird. Bevorzugt weist die Rastverbindung mindestens eine Sollbruchstelle auf, die bei Auftreten eines entsprechend hohen Drucks die Rastverbindung zerstört und Deckel und Heiztopf dauerhaft voneinander trennt. Bei der Wartung kann der Heiztopf selbstverständlich auf einfache Art und Weise aus dem Tank entfernt werden und durch einen neuen Heiztopf, beispielsweise als Bestandteil einer vormontierten Flüssigkeitsentnahmevorrichtung, wieder eingeführt beziehungsweise ersetzt werden.

Gemäß einer vorteilhaften Weiterbildung der Erfindung ist vorgesehen, dass der Tank insbesondere an seinem Boden eine Zentrieraufnahme für den Heiztopf aufweist. Bei der Montage wird der Heiztopf zumindest bereichsweise axial in die Zentrieraufnahme eingeschoben. Während des Betriebs, insbesondere wenn das Fluid in dem Heiztopf gefriert, verlagert sich der Heiztopf weiter in Richtung des Tankbodens, gegebenenfalls unter Zerstören der Sollbruchstelle der Rastverbindung und wird durch die Zentrieraufnahme weiterhin in Position gehalten beziehungsweise geführt.

Das erfindungsgemäße Verfahren zeichnet sich dadurch aus, dass die Einrichtung wenigstens ein zumindest radial verformbares Spannelement aufweist, das zur Befestigung der Flüssigkeitsentnahmeeinrichtung, insbesondere des Deckels, an dem Tank derart radial verformt wird, dass es zumindest einen Bereich der Flüssigkeitsentnahmeeinrichtung und einen Radialvorsprung des Tanks axial umgreift. Das Spannelement wird somit aus einer Ausgangsstellung, in welcher es radial oder axial in einer den Deckel beziehungsweise die Flüssigkeitsentnahmeeinrichtung zumindest im Wesentlichen umschließende Position geschoben wurde, radial verformt, um in eine Hintergriffsposition in axialer Richtung mit dem Deckel und dem Radialvorsprung zu gelangen, wodurch Deckel und Radialvorsprung axial formschlüssig aneinandergehalten werden. Vorzugsweise wird vorher bereits die Fördereinrichtung an dem Deckel befestigt. Weitere vorteilhafte Weiterbildungen ergeben sich aus den Ansprüchen sowie aus dem obenstehend Beschriebenen. Im Folgenden soll die Erfindung anhand der Zeichnung näher erläutert werden. Dazu zeigen:
- Figur 1: eine nicht erfindungsgemäße Vorrichtung zur Abgasnachbehandlung einer Brennkraftmaschine in einer vereinfachten Längsschnittdarstellung,
- Figur 2: eine erfindungsgemäße Vorrichtung in einer vorteilhaften Längsschnittdarstellung und
- Figur 3: eine Detailansicht der Vorrichtung in einer Draufsicht.

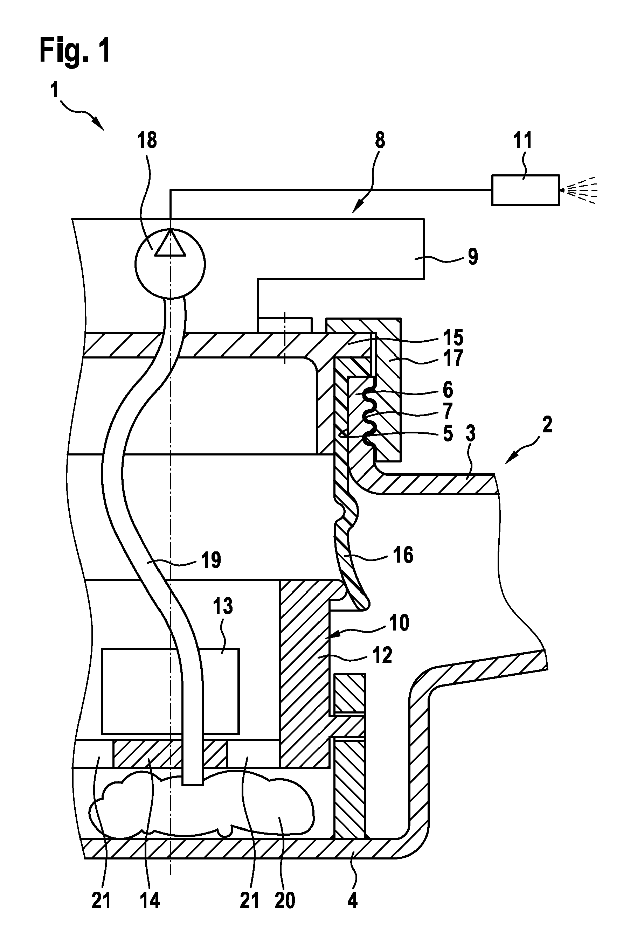

Figur 1 zeigt in einer vereinfachten Längsschnittdarstellung eine Vorrichtung 1 zum Bereitstellen eines flüssigen Abgasnachbehandlungsmittels. Die Vorrichtung 1 weist einen Tank 2 auf, von dem in der Darstellung eine Tankdecke 3 und ein Tankboden 4 gezeigt sind. Die Tankdecke 3 weist eine Tanköffnung 5 auf. Die Tanköffnung 5 wird von einem Tankstutzen 6 gebildet, der auf seiner Mantelaußenseite ein Außengewinde 7 aufweist.

In der Tanköffnung 5 ist eine Flüssigkeitsentnahmeeinrichtung 8 gehalten, die eine Fördereinrichtung 9 sowie eine Heizeinrichtung 10 umfasst. Die Heizeinrichtung 10 ist in dem Tank 2 angeordnet, um gegebenenfalls gefrorenes Abgasnachbehandlungsmittel aufzutauen und zu verflüssigen, sodass es mittels der Fördereinrichtung 9 aus dem Tank 2 zu einem dem Abgastank zugeordneten Dosierventil 11 gefördert wird, wo eine gewünschte Menge des Abgasnachbehandlungsmittels dem Abgas einer Brennkraftmaschine insbesondere stromaufwärts eines Katalysators beigemischt wird.

Die Heizeinrichtung 10 weist einen Heiztopf 12 auf, das bevorzugt aus einem gut wärmeleitfähigen Material gefertigt ist, und dem zumindest ein Heizelement 13 zugeordnet ist. Vorliegend ist das Heizelement 13 auf der Topfinnenseite nahe zu dem Topfboden 14 angeordnet. Der Heiztopf 12 ist nahe zu dem Tankboden 4 und damit beabstandet zu der Tanköffnung 5 in dem Tank 2 angeordnet, wobei er zur Tanköffnung 5 hin offen ausgerichtet ist.

Auf der freien Stirnseite des Tankstutzens 6 liegt ein Deckel 15 auf, der bündig mit der Mantelaußenseite des Tankstutzens 6 abschließt und bereichsweise in die Tanköffnung 5 hineinragt. Zwischen dem Deckel 15 und dem Tankstutzen 6 ist bevorzugt eine elastisch verformbare Dichtschürze 16 gehalten, die am freien Stirnende des Heiztopfs 12 aufgrund ihrer Eigenspannung aufliegt. Die Dichtschürze 16 verhindert, dass einmal durch die Heizeinrichtung 10 verflüssigtes Abgasnachbehandlungsmittel aus dem Heiztopf 12 herausschwappt und beispielsweise wieder gefriert, und damit nicht zurück zu dem oder in den Heiztopf 12 gelangt und nicht mehr zur Abgasnachbehandlung zur Verfügung steht.

Zur Befestigung des Deckels 15 ist auf diesen eine Überwurfmutter 17 aufgeschoben, die ein Innengewinde aufweist, das mit dem Außengewinde des Tankstutzens 6 zusammenwirkt. Durch Festziehen der Überwurfmutter 17 wird der Deckel 15 auf dem Tankstutzen 6 festgelegt.

Von der Fördereinrichtung 9, die vorliegend eine elektrisch betriebene Pumpe 18 aufweist, führt eine Sauglanze 19 von der Pumpe 18 in den Tank 2, wobei sich die Sauglanze 19 durch eine Öffnung des Bodens 14 des Heiztopfes 12 hindurch erstreckt und in einem Filterelement 20 endet, das am Boden 4 des Tanks 2 angeordnet ist. Der Boden 14 des Heiztopfs 12 weist weitere Öffnungen 21 auf, durch welche Abgasnachbehandlungsmittel in den Heiztopf 12 hinein oder aus diesem herausgelangen kann.

Wie dargestellt, ist üblicherweise die Fördereinrichtung 9 derart ausgebildet, dass sie einen größeren Durchmesser als die Überwurfmutter 17 aufweist, sodass bei der Montage zuerst die Heizeinrichtung 10, der Deckel 15 und die Überwurfmutter 17 montiert werden müssen, bevor die Fördereinrichtung 9 installiert werden kann.

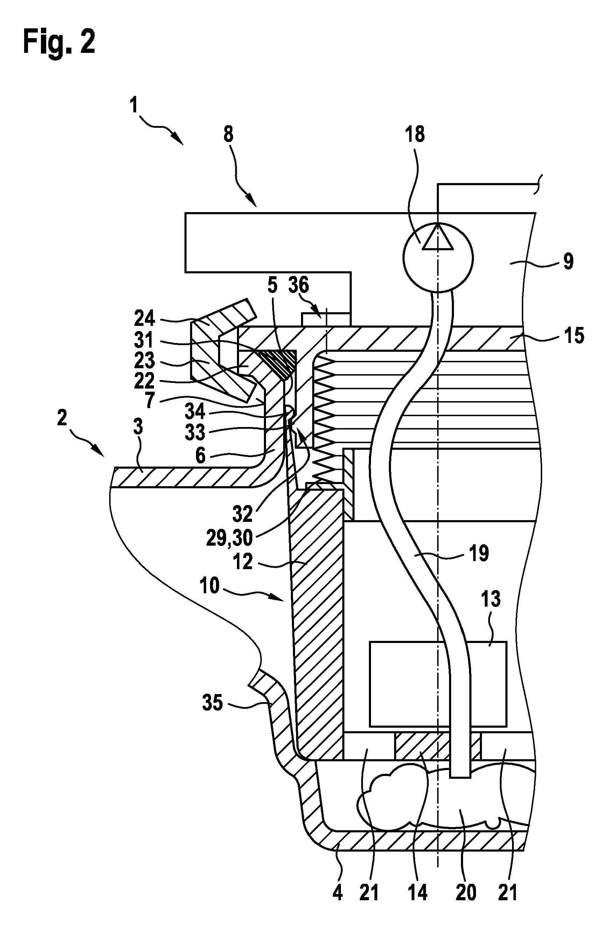

Figur 2 zeigt eine erfindungsgemäße Weiterbildung der Vorrichtung 1, wobei aus Figur 1 bereits bekannte Elemente mit den gleichen Bezugszeichen versehen sind und insofern auf die obenstehende Beschreibung verwiesen wird. Im Folgenden soll im Wesentlichen auf die Unterschiede eingegangen werden.

Im Unterschied zu der bekannten Ausführung ist vorgesehen, dass der Tankstutzen 6 einen Radialvorsprung 22 aufweist, der von einem sich über den gesamten Umfang erstreckenden Steg gebildet wird, der an der Mantelaußenseite des Tankstutzens 6 an dessen freien Ende angeordnet beziehungsweise ausgebildet ist. Zur Befestigung des Deckels 15 an dem Tank 2 ist nunmehr eine Spannschelle 23 vorgesehen, die einen im Wesentlichen V-förmigen Querschnitt aufweist, und somit auch als V-Schelle bezeichnet werden kann. Die Spannschelle 23 stellt ein radial verformbares Spannelement 24 dar, das sich im Wesentlichen über den Umfang des Deckels 15 sowie des Radialvorsprungs 22 erstreckt.

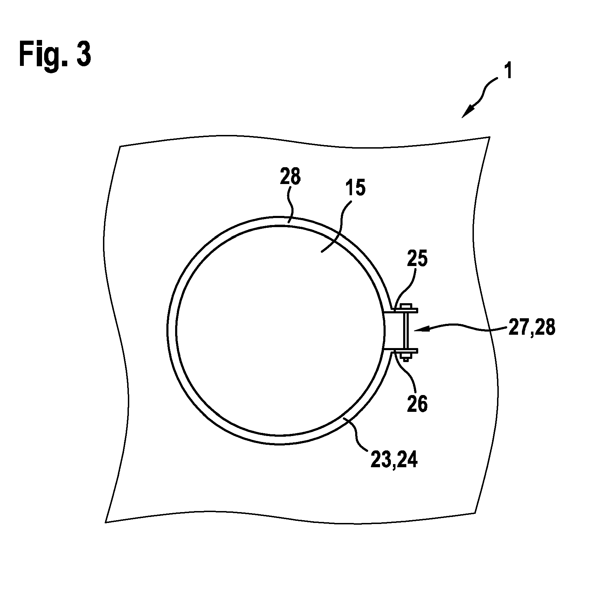

Figur 3 zeigt hierzu die Vorrichtung 1 in einer Draufsicht ohne installierte Fördereinrichtung 9. Die Spannschelle 23 umschließt als Ringsegmentelement 23' den Deckel 15 und den Tankstutzen 6 fast voll umfänglich, wobei ihre freien Enden 25, 26 mittels einer Spannvorrichtung 27 verbunden sind, die als Spannverschraubung ausgebildet ist. Dazu sind die freien Enden 25, 26 derart umgebogen, dass sie parallel zueinander radial nach außen verlaufen, wobei eine Spannschraube durch eine entsprechende Öffnung beider Enden 25, 26 hindurchgeschoben ist, die mit ihrem Schraubenkopf am Ende 25 aufliegt, und wobei an dem anderen Ende eine auf die Spannschraube aufgeschraubte Schraubenmutter vorgesehen ist. Wird die Schraubenmutter auf die Spannschraube aufgeschraubt, werden die Enden 25, 26 aufeinander zu bewegt und dadurch der Durchmesser der Spannschelle 23 verkleinert.

Insbesondere aufgrund der V-förmigen Ausbildung der Spannschelle, wie in Figur 2 dargestellt, hat dies zur Folge, dass aufgrund der schräggestellten Schenkel der Spannschelle 23 - im Querschnitt gesehen - der Deckel 15 und der Radialvorsprung 22 gegeneinander verpresst und dadurch aneinandergehalten werden.

Aufgrund der radialen Verformbarkeit der Spannschelle 23 ist es möglich, die Fördereinrichtung 9, den Deckel 15 und den Heiztopf 12 vorab als Vormontagebaugruppe zu montieren und als solche in den Tank 2 einzusetzen. Die Spannschelle 23 kann entweder so weit radial geweitet werden, dass sie über die Fördereinrichtung 9 axial in Position geschoben wird, oder sie wird beispielsweise durch Entfernen der Verspannverschraubung 27 derart weit radial verformt beziehungsweise geöffnet, dass sie seitlich auf den Deckel 15 und den Radialvorsprung 22 aufgeschoben wird beziehungsweise werden kann.

Alternativ zu der Ausbildung als V-förmige Spannschelle kann diese auch als U-förmige Spannschelle ausgebildet sein, wobei dann die vorteilhafte Selbstzentrierung und das Verpressen von Deckel 15 und Radialvorsprung 22 miteinander im Wesentlichen entfallen.

Ebenso ist es denkbar, anstelle der vorliegenden Spannschelle 23, die ein einzelnes elastisch verformbares Ringsegmentelement 23 bildet, eine Spannschelle vorzusehen, die von mehreren in Umfangsrichtung miteinander verbundenen Ringsegmentelementen gebildet wird. Beispielsweise ist es denkbar, zwei Ringsegmentelemente einendig mittels eines Gelenks miteinander zu verbinden, und die freibleibenden Enden mit einer Spannvorrichtung 27 wie in Figur 3 gezeigt zu verbinden. Auch ist es denkbar, anstelle der Spannverschraubung 27 als Spannvorrichtung 28 einen Spannbügel vorzusehen, der durch ein einfaches Umklappen, insbesondere in Umfangsrichtung gesehen, den Abstand der freien Enden zueinander verringert oder vergrößert - je nach Klapp-/Betätigungsrichtung -. Sind zwei oder mehr Ringsegmentelemente vorgesehen, so können diese auch steif oder zumindest im Wesentlichen steif ausgebildet sein.

Weiterhin weist die Vorrichtung 1 gemäß dem erfindungsgemäßen Ausführungsbeispiel keine Dichtschürze 16 auf. Stattdessen sind der Heiztopf 12 und der Deckel 15 durch ein ein Zugfederelement 29 bildendes Wellrohr 30 miteinander verbunden, das an der Unterseite des Deckels 15 und an dem Heiztopf 12 befestigt ist. Zweckmäßigerweise ist das Wellrohr 30 dabei derart an dem Deckel 15 und Heizrohr 12 befestigt, dass es eine Dichtung bildet, die das Herausschwappen von flüssigem Abgasnachbehandlungsmittel verhindert. Gefriert das flüssige Abgasnachbehandlungsmittel in dem Heiztopf 12, so erlaubt das Wellrohr 30, dass sich der Abstand von dem Heiztopf 12 zu dem Deckel 15 vergrößert, wodurch das zunehmende Volumen des gefrierenden Abgasnachbehandlungsmittels kompensiert werden kann. Hierdurch wird insbesondere erreicht, dass der Deckel 15 und/oder der Tank 2 nicht beschädigt werden, wenn Temperaturen unter den Gefrierpunkt fallen und das Abgasnachbehandlungsmittel gefriert. Weiterhin ist ein elastisch verformbarer Dichtring 31 vorgesehen, der zwischen dem Deckel 15 und dem Radialvorsprung 22 verspannt gehalten ist, um den Tank 2 dichtend zu verschließen.

Zur Bildung der Vormontagegruppe ist der Heiztopf 12 zweckmäßigerweise an dem Deckel 15 arretierbar. Hierzu ist gemäß dem vorliegenden Ausführungsbeispiel eine Rastverbindung 32 vorgesehen, die zwischen dem Deckel 15 und dem Heiztopf 12 wirkt. Dazu weist der Deckel 15 an seinem in die Tanköffnung 5 hineinragenden Abschnitt außenseitig eine oder mehrere Rastnasen 33 auf, die mit Rastnasen auf der Innenseite der Seitenwand beziehungsweise Mantelwand des Heiztopfs 12 zusammenwirken. Der Heiztopf 12 erstreckt sich vorliegend somit mit seiner Mantelwand zumindest bereichsweise in die Tanköffnung 5 hinein, sodass die Mantelwand zwischen dem Tankstutzen 6 und dem Tankdeckel 15 radial einliegt.

Die Rastverbindung 32 ist vorzugsweise lösbar ausgebildet, sodass eine die Zugkraft des Zugfederelements 29 wirkende Druckkraft beispielsweise aufgrund des gefrierenden Abgasnachbehandlungsmittels entsteht, der Heiztopf 12 sich von dem Deckel 15 löst. Hierzu können beispielsweise die Rastnasen 33 und/oder 34 elastisch verformbar ausgebildet sein. Alternativ ist es denkbar, die Rastnasen 33 und/oder 34 mit einer Sollbruchstelle zu versehen, sodass bei auftretendem Überdruck die Rastverbindung zerstört wird.

Zur Führung des Heiztopfes 12 in dem Tank 2 ist darüber hinaus im Tankboden eine Zentrieraufnahme 35 ausgebildet, die den Heiztopf 12 axial führt und die Montage erleichtert. Insbesondere nachdem die Rastverbindung 32 gelöst oder zerstört wurde, dient die Zentrieraufnahme 35 zur Führung des Heiztopfes 12 in dem Tank 2, sodass ein vollständiges Lösen des Heiztopfes 12 von der Flüssigkeitsentnahmeeinrichtung 8 verhindert wird.

Die Fördereinrichtung 9 kann vor oder nach Vorsehen der Spannschelle 23 an dem Deckel 15, beispielsweise mittels einer Verschraubung 36 befestigt werden.

## Patentansprüche

1. Vorrichtung (1) zum Bereitstellen einer Flüssigkeit, insbesondere eines Abgasnachbehandlungsmittels für ein Kraftfahrzeug, mit einem Tank (2) zur Aufnahme der Flüssigkeit und mit einer Flüssigkeitsentnahmeeinrichtung (8), die eine Fördereinrichtung (9) und eine in dem Tank (2) anordenbare Heizeinrichtung (10) aufweist, wobei die Heizeinrichtung (10) einen durch eine Tanköffnung (5) in den Tank (2) einbringbaren Heiztopf (12) aufweist, und wobei mindestens eine Einrichtung (23) zum Befestigen der Flüssigkeitsentnahmeeinrichtung (8) an dem Tank (2) vorgesehen ist, **dadurch gekennzeichnet, dass** die Einrichtung (23) wenigstens ein zumindest radial verformbares Spannelement (24) aufweist, das zur Befestigung der Flüssigkeitsentnahmeeinrichtung (8) an dem Tank (2) derart radial verformt ist, dass es zumindest einen Bereich der Flüssigkeitsentnahmeeinrichtung (8) und einen Radialvorsprung (22) des Tanks (2) axial umgreift.

2. Vorrichtung nach Anspruch 1, **dadurch gekennzeichnet, dass** das Spannelement (24) ein elastisch und/oder plastisch verformbares Ringsegmentelement (23) aufweist.

3. Vorrichtung nach einem der vorhergehenden Ansprüche, **dadurch gekennzeichnet, dass** das Spannelement (24) wenigstens eine Spannvorrichtung (28), insbesondere einen umlegbaren Spannbügel und/oder eine Spannverschraubung (27), zur radialen Verformung des Spannelements (24) aufweist.

4. Vorrichtung nach einem der vorhergehenden Ansprüche, **dadurch gekennzeichnet, dass** das Spannelement (24) wenigstens zwei gelenkig miteinander verbundene Ringsegmentelemente aufweist.

5. Vorrichtung nach Anspruch 4, **dadurch gekennzeichnet, dass** das jeweilige Ringsegmentelement (23) einen V-oder U-förmigen Querschnitt aufweist.

6. Vorrichtung nach einem der vorhergehenden Ansprüche 1 bis 3, **dadurch gekennzeichnet, dass** das Spannelement (24) als Spannschelle (23), insbesondere als V- oder U-Schelle ausgebildet ist.

7. Vorrichtung nach einem der vorhergehenden Ansprüche, **dadurch gekennzeichnet, dass** zwischen einem den Heiztopf (12) verschließenden Deckel (15) und dem Heiztopf (12) wenigstens ein Zugfederelement (29), insbesondere ein elastisch verformbares Wellrohr (30), angeordnet ist, das Deckel (15) und Heiztopf (12) zusammenzieht.

8. Vorrichtung nach einem der vorhergehenden Ansprüche, **dadurch gekennzeichnet, dass** der Heiztopf (12) an dem Deckel (15) mittels einer Rastverbindung (32) gehalten ist, die entgegen der Federkraft des Zugfederelements (29) lösbar ist.

9. Vorrichtung nach einem der vorhergehenden Ansprüche, **dadurch gekennzeichnet, dass** der Tank (2) insbesondere an seinem Boden (4) eine Zentrieraufnahme (35) für den Heiztopf (12) aufweist.

10. Verfahren zur Herstellung einer Vorrichtung (1) zum Bereitstellen einer Flüssigkeit, insbesondere nach einem oder mehreren der vorhergehenden Ansprüche, mit einem Tank (2) zur Aufnahme eines Abgasnachbehandlungsmittels und mit einer Flüssigkeitsentnahmeeinrichtung (8), die ein Fördermodul (9) und eine Heizeinrichtung (10) aufweist, wobei die Heizeinrichtung (10) in dem Tank (2) angeordnet wird und ein durch eine Tanköffnung (5) in den Tank (2) einbringbaren Heiztopf (12) aufweist, und wobei mindestens eine Einrichtung zum Befestigen der Flüssigkeitsentnahmeeinrichtung (8) an dem Tank (2) vorgesehen wird, **dadurch gekennzeichnet, dass** die Einrichtung wenigstens ein zumindest radial verformbares Spannelement (24) aufweist, das zur Befestigung der Flüssigkeitsentnahmeeinrichtung (8) an dem Tank (2) derart radial verformt wird, dass es zumindest einen Bereich der Flüssigkeitsentnahmeeinrichtung (8) und einen Radialvorsprung (22) des Tanks (2) axial umgreift.

## Claims

1. Apparatus (1) for supplying a liquid, in particular an exhaust-gas aftertreatment agent for a motor vehicle, having a tank (2) for accommodating the liquid and having a liquid extraction device (8) which has a delivery device (9) and a heating device (10) which can be arranged in the tank (2), wherein the heating device (10) has a heating pot (12) which can be introduced into the tank (2) through a tank opening (5), and wherein at least one device (23) is provided for fastening the liquid extraction device (8) to the tank (2), **characterized in that** the device (23) has at least one at least radially deformable clamping element (24) which, in order to fasten the liquid extraction device (8) to the tank (2), is deformed radially so as to engage axially around at least one region of the liquid extraction device (8) and a radial projection (22) of the tank (2).

2. Apparatus according to Claim 1, **characterized in that** the clamping element (24) has an elastically and/or plastically deformable annular segment element (23) .

3. Apparatus according to one of the preceding claims, **characterized in that** the clamping element (24) has at least one clamping apparatus (28), in particular a clamping clip which can be folded over and/or a clamping screw connection (27), for the radial deformation of the clamping element (24).

4. Apparatus according to one of the preceding claims, **characterized in that** the clamping element (24) has at least two annular segment elements which are articulatedly connected to one another.

5. Apparatus according to Claim 4, **characterized in that** the respective annular segment element (23) has a V-shaped or U-shaped cross section.

6. Apparatus according to one of the preceding Claims 1 to 3, **characterized in that** the clamping element (24) is in the form of a clamping collar (23), in particular a V-shaped or U-shaped collar.

7. Apparatus according to one of the preceding claims, **characterized in that**, between the heating pot (12) and a cover (15) which closes off the heating pot (12), there is arranged at least one tension spring element (29), in particular an elastically deformable corrugated tube (30), which pulls the cover (15) and heating pot (12) together.

8. Apparatus according to one of the preceding claims, **characterized in that** the heating pot (12) is held on the cover (15) by means of a detent connection (32) which can be released counter to the spring force of the tension spring element (29).

9. Apparatus according to one of the preceding claims, **characterized in that** the tank (2) has, in particular on its base (4), a centring receptacle (35) for the heating pot (12).

10. Method for producing an apparatus (1) for supplying a liquid, in particular according to one or more of the preceding claims, having a tank (2) for accommodating an exhaust-gas aftertreatment agent and having a liquid extraction device (8) which has a delivery module (9) and a heating device (10), wherein the heating device (10) is arranged in the tank (2) and has a heating pot (12) which can be introduced into the tank (2) through a tank opening (5), and wherein at least one device is provided for fastening the liquid extraction device (8) to the tank (2), **characterized in that** the device has at least one at least radially deformable clamping element (24) which, in order to fasten the liquid extraction device (8) to the tank (2), is deformed radially so as to engage axially around at least one region of the liquid extraction device (8) and a radial projection (22) of the tank (2) .

## Revendications

1. Dispositif (1) pour fournir un liquide, en particulier un agent de post-traitement des gaz d'échappement pour un véhicule automobile, comprenant un réservoir (2) destiné à recevoir le liquide et comprenant un dispositif de prélèvement de liquide (8) qui comprend un dispositif de transport (9) et un dispositif de chauffage (10) pouvant être disposé dans le réservoir (2), le dispositif de chauffage (10) comprenant un pot de chauffage (12) pouvant être inséré dans le réservoir (2) à travers une ouverture de réservoir (5), et au moins un dispositif (23) de fixation du dispositif de prélèvement de liquide (8) au réservoir (2) étant prévu, **caractérisé en ce que** le dispositif (23) comprend au moins un élément de serrage (24) déformable au moins radialement, lequel est déformé radialement en vue de la fixation du dispositif de prélèvement de liquide (8) au réservoir (2), de telle sorte qu'il vienne en prise axialement autour d'au moins une région du dispositif de prélèvement de liquide (8) et d'une saillie radiale (22) du réservoir (2).

2. Dispositif selon la revendication 1, **caractérisé en ce que** l'élément de serrage (24) comprend un élément de segment annulaire (23) déformable élastiquement et/ou plastiquement.

3. Dispositif selon l'une quelconque des revendications précédentes, **caractérisé en ce que** l'élément de serrage (24) comprend au moins un dispositif de serrage (28), en particulier un étrier de serrage repliable et/ou un vissage de serrage (27), en vue de la déformation radiale de l'élément de serrage (24).

4. Dispositif selon l'une quelconque des revendications précédentes, **caractérisé en ce que** l'élément de serrage (24) comprend au moins deux éléments de segment annulaire reliés les uns aux autres de manière articulée.

5. Dispositif selon la revendication 4, **caractérisé en ce que** l'élément de segment annulaire (23) respectif présente une section transversale en forme de V ou en forme de U.

6. Dispositif selon l'une quelconque des revendications précédentes 1 à 3, **caractérisé en ce que** l'élément de serrage (24) est réalisé en tant que collier de serrage (23), en particulier en tant que collier en V ou en U.

7. Dispositif selon l'une quelconque des revendications précédentes, **caractérisé en ce qu'**au moins un élément de ressort de traction (29), en particulier un tube ondulé (30) déformable élastiquement, est disposé entre un couvercle (15) fermant le pot de chauffage (12) et le pot de chauffage (12), lequel élément de ressort de traction resserre le couvercle (15) et le pot de chauffage (12).

8. Dispositif selon l'une quelconque des revendications précédentes, **caractérisé en ce que** le pot de chauffage (12) est maintenu sur le couvercle (15) au moyen d'une liaison par encliquetage (32) qui peut être desserrée à l'encontre de la force de ressort de l'élément de ressort de traction (29).

9. Dispositif selon l'une quelconque des revendications précédentes, **caractérisé en ce que** le réservoir (2) comprend, en particulier sur son fond (4), un logement de centrage (35) pour le pot de chauffage (12).

10. Procédé de fabrication d'un dispositif (1) pour fournir un liquide, en particulier selon l'une quelconque ou plusieurs des revendications précédentes, comprenant un réservoir (2) destiné à recevoir un agent de post-traitement des gaz d'échappement et comprenant un dispositif de prélèvement de liquide (8) qui comprend un module de transport (9) et un dispositif de chauffage (10), le dispositif de chauffage (10) étant disposé dans le réservoir (2) et comprenant un pot de chauffage (12) pouvant être inséré dans le réservoir (2) à travers une ouverture de réservoir (5), et au moins un dispositif de fixation du dispositif de prélèvement de liquide (8) au réservoir (2) étant prévu, **caractérisé en ce que** le dispositif comprend au moins un élément de serrage (24) déformable au moins radialement, lequel est déformé radialement en vue de la fixation du dispositif de prélèvement de liquide (8) au réservoir (2), de telle sorte qu'il vienne en prise axialement autour d'au moins une région du dispositif de prélèvement de liquide (8) et d'une saillie radiale (22) du réservoir (2).
